# NEUE EUROPÄISCHE PATENTSCHRIFT

(11) **EP 1 222 441 B2**
(45) Veröffentlichungstag und Bekanntmachung des Hinweises auf die Entscheidung über den Einspruch: **18.04.2007**
(45) Hinweis auf die Patenterteilung: 03.03.2004
(21) Anmeldenummer: 00969494.4
(22) Anmeldetag: 12.10.2000
(51) Int. Cl.: G01C 21/26

(54) **KAMERAVORRICHTUNG FÜR FAHRZEUGE**
CAMERA SYSTEM FOR VEHICLES
SYSTEME DE CAMERA POUR VEHICULES

(30) Priorität: 16.10.1999 DE 19950033
(43) Veröffentlichungstag der Anmeldung: 17.07.2002
(73) Patentinhaber: Bayerische Motoren Werke Aktiengesellschaft, 80809 München (DE)
(72) Erfinder: HAHN, Wolfgang, 85247 Schwabhausen (DE)
(86) Internationale Anmeldenummer: PCT/EP2000/010051
(87) Internationale Veröffentlichungsnummer: WO 2001/029513

(56) Entgegenhaltungen:
- DE-A- 4 124 654
- FR-A- 2 785 434
- JP-A- 1 044 512
- JP-A- 5 238 314
- JP-A- 9 096 508
- JP-A- 10 262 239
- US-A- 5 172 317
- US-A- 5 559 695
- US-A- 5 633 946
- US-A- 5 894 323

## Beschreibung

Die Erfindung bezieht sich auf eine Kameravorrichtung für Fahrzeuge mit den Merkmalen des Oberbegriffs des Patentanspruchs 1.

Variabel ausrichtbare Kameravorrichtungen für Fahrzeuge sind allgemein bekannt. Zum weiteren Umfeld der Erfindung wird auf die EP 0 782 059 A1, die WO 9219811 A1 und die US 5,121,200 hingewiesen. Aus diesen Dokumenten ist es jedoch nicht bekannt, die Kamera bereits vor Beginn einer Kurvenfahrt in die richtige Richtung zu verschwenken.

Ferner haben Kamerasysteme, besonders Infrarotkameras, ein begrenztes Gesichtsfeld, das durch die verwendete Optik an eine Sensoraufgabe angepaßt ist Für einen Einsatz im Nahbereich wird beispielsweise ein großes horizontales Gesichtsfeld benötigt, mit dem sich jedoch aus Gründen der Auflösung oftmals keine Anwendungen im Fembereich realisieren lassen.

Aus der US 5,894,323 ist ein Bildaufnahme- und -verarbeitungssystem insbesondere für ein Flugzeug bekannt, bei dem zumindest eine Kamera unter Erfassen von Flugzeugbewegungsparametem derart gesteuert wird, dass ein zu erfassender Aufnahmebereich unabhängig von Flugbewegungen erfassbar ist. Dieses System beschreibt jedoch keine Anwendung bei einem Fahrzeugs, für welches ein zu durchfahrender Straßenverlauf zu erfassen ist.

US-A-5 559 695 beschreibt eine auf einem Fahrzeug montierte Kamera, welche durch Analyse der von ihr aufgenommenen Bilder automatisch auf den vor dem Fahrzeug liegenden Strassenverlauf vorausschauend eingestellt wird.

Die JP 01-044512 beschreibt ein Steuergerät, das die Ausrichtung einer auf einem Fahrzeug montierten Kamera anhand von Kamerabilddaten auf den Strassenverlauf steuert.

Der Erfindung liegt die Aufgabe zugrunde, eine Kameravorrichtung der eingangs genannten Art derart weiterzubilden, daß eine fortwährende Erfassung des vorausliegenden Straßenverlaufes bei guter Auflösung möglich ist.

Die Erfindung löst diese Aufgabe durch die kennzeichnenden Merkmale des Patentanspruchs 1.

Die verstell-, insbesondere verschwenkbare Kamera wird bereits vor Beginn einer Kurve in Richtung des dann folgenden Kurvenverlaufes verstellt. Damit ist es möglich, die Kurvenfahrt mit bereits in die richtige Richtung verschwenkter Kamera anzutreten. Entsprechend gilt dies während der Kurvenfahrt. Auch dort wird die Erfassung des Straßenverlaufs im weiteren Verlauf der Kurve durch eine entsprechende, im voraus erfolgende Verschwenkung der Kamera erreicht. Eine entsprechende Verstellung kann auch für den Kurvenauslauf bereitgestellt werden, wo die Kamera rechtzeitig und noch in der Kurve das anschließende Geradenstück bzw. die Fahrbahnfortführung erfaßt.

Die Information über eine anstehende Kurvenfahrt kann aus fahrdynamischen Parametern und/oder über ein satellitengestütztes Informationssystem (GPS = Global Positioning System) entstammen. Die Genauigkeit der satellitengestützten Information ist bereits heute in den meisten Fällen ausreichend, eine brauchbare Information über den aktuellen Standort des Fahrzeugs zu liefern. Mit zunehmender Genauigkeitsverbesserung dieser Information läßt sich die Ausrichtung der Kamera in Bezug auf den Straßenverlauf optimieren. Eine kombination von fahrdynamischen Parametern und satellitengestützien Informationen ist besonders dann von Vorteil, wenn mehrere Fahrtrichtungsmöglichkeiten, beispielsweise bei einer Gabelung, gegeben sind. In diesem Fall kann über fahrdynamische Parameter die tatsächlich gewählte Fahrtrichtung erkannt werden.

Vorteilhafte Ausgestaltungen der Erfindung sind Gegenstand der weiteren Patentansprüche.

So ist es beispielsweise möglich, das Steuergerät mit dem Ausgangssignal einer Navigationseinrichtung zu versorgen. Da eine derartige Vorrichtung in aller Regel ohnehin vorhanden ist, handelt es sich bei der variablen Kameraausrichtung um einen Zusatznutzen der Navigationsvorrichtung.

Entsprechend kann das Steuergerät in die Navigationseinrichtung integriert sein. Eine derartige Einrichtung steuert dann einerseits eine Anzeige für die Navigation und zusätzlich einen Antrieb für die Änderung der Kamerablickrichtung.

Entsprechend dem Grundgedanken der Erfindung könnte mit Hilfe des Steuergeräts auch die Höhenausrichtung der Kamera, die beispielsweise kurvenverlaufsabhängig seitenverschwenkbar ist, verändert werden.

Schließlich kann die Verschwenkung der Kamera sowohl in horizontaler als auch in vertikaler Richtung abhängig von der Fahrzeuggeschwindigkeit vorgenommen sein. Bei hoher Geschwindigkeit erfolgt die Verschwenkung in größerem Abstand vor Beginn einer Kurve als bei niedriger Geschwindigkeit. Es wird damit dem Kamerasystem die Möglichkeit gegeben, sich rechtzeitig auf den Verlauf der Straße einzustellen.

Im übrigen ist es möglich, auch das Erfassungsfeld einer Kamera abhängig von den vorliegenden Informationen zu steuern, beispielsweise kann durch eine Zoom-Funktion ein Nah- oder Fembereich eingestellt werden, abhängig, ob eine längere Geradeausfahrt oder eine Fahrt um eine enge Kurve zu erwarten ist.

Die Kamera kann auf einer beweglichen Plattform angeordnet sein, die vom Steuergerät angesteuert wird. Alternativ ist es auch möglich, daß nur das Linsensystem der Kamera variiert wird, so daß das Kameragehäuse an sich feststehend angeordnet ist. Im letzteren Fall ist jedoch nur eine eingeschränkte Verschwenkung möglich.

Als fahrdynamische Parameter können Parameter verwendet werden, die auf eine Fahrtrichtungsänderung hinweisen, insbesondere der Lenkwinkel, der Gierwinkel oder eine Seitenbeschleunigung des Fahrzeugs.

Die Erfindung wird nachfolgend und mit Bezug auf die beiliegenden Zeichnungen näher erläutert. Die Zeichnungen zeigen in
- Fig. 1: eine schematische Darstellung einer an einem Fahrzeug verschwenkbar angeordneten Kamera und
- Fig. 2: eine Blockdiagramm einer Steuereinrichtung zur geeigneten Ausrichtung der in Fig. 1 dargestellten Kamera.

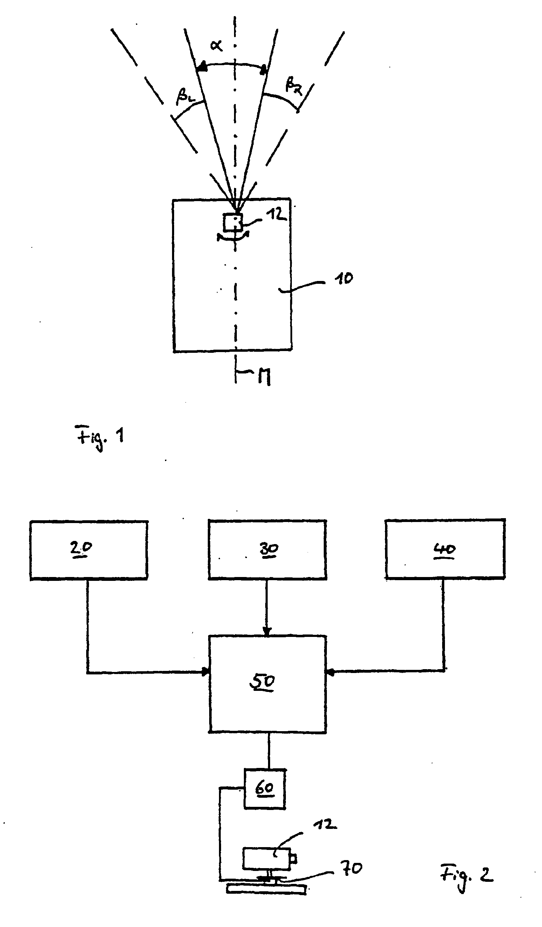

In Fig. 1 ist nur schematisch und andeutungsweise ein Fahrzeug 10 dargestellt, auf dem, im wesentlichen in Fahrtrichtung ausgerichtet, eine Infrarotkamera 12 auf einer horizontal verschwenkbaren Plattform (nicht näher dargestellt) angeordnet ist. Die Infrarotkamera 12 besitzt ein Gesichtsfeld mit einem Öffnungswinkel α von 10°. Überdies läßt sich die Infrarotkamera 12 bezüglich der Mittelsenkrechten M um jeweils einen Winkel β (β_{R}, β_{L}) von 15° nach rechts und links verschwenken. Somit deckt die Infrarotkamera 12 insgesamt einen Winkelbereich von 40° (15° + 10° + 15°) ab. Dieser Winkelbereich definiert das virtuelle Gesichtsfeld.

Die verschwenkbare Plattform wird von einer Steuereinrichtung angesteuert, die näher in Fig. 2 dargestellt ist.

Ein GPS-System 20 liefert Informationen über den aktuellen Standort des Fahrzeugs, die es aus Informationen von GPS-Satelliten erhält, an eine Auswerteeinrichtung 50 der Steuereinrichtung. Ferner werden von einem Navigationssystem 30 Informationen über den Verlauf und die örtliche Lage der Straße, auf der sich das Fahrzeug gerade befindet, aus einer digitalen Straßenkarte entnommen und ebenfalls an die Auswerteeinrichtung 50 weitergeleitet. Die Auswerteeinheit 50 erhält ferner als Eingangsgröße den Lenkwinkel. Alternativ können auch andere fahrdynamische Parameter als Eingangsgröße verwendet werden. Diese Parameter liegen auf einem Daten-Bus vor, an den die Auswerteeinheit 50 angeschlossen ist.

In der Auswerteeinheit 50 wird die Istposition des Fahrzeugs und die Vorschau auf den vorausliegenden Straßenverlauf errechnet und an eine Steuerung 60 für die verschwenkbare Plattform weitergegeben. Die Steuerung 60 beaufschlagt die verschwenkbare Plattform bzw. einen dazugehörigen Motor 70 entsprechend.

Zusätzlich kann die Kamera - falls notwendig - noch in ihrer vertikalen Ausrichtung oder in ihrem Erfassungsfeld eingestellt werden.

Auf diese Weise ist es möglich, die Kameraausrichtung den tatsächlichen Gegebenheiten und Notwendigkeiten einer Fahrt anzupassen. Insbesondere kann die Anwendung der Kamera für den Fernbereich erhalten bleiben, d.h. man muß keinen Kompromiß beim Gesichtsfeld mehr in Kauf nehmen. Gleichzeitig kann mit der Anpassung der Kameraausrichtung der informationsrelevante Bereich des Fahrzeugumfeldes bei Kurvenfahrt mit guter räumlicher Auflösung detektiert werden. Die Bilder können dann entweder direkt dem Fahrer zu seiner Information dargeboten oder über eine Bildverarbeitung zur Regelung von längs- und/oder querdynamischen Fahrzeugparametern genutzt werden.

## Patentansprüche

1. Kameravorrichtung für Fahrzeuge mit einer variabel ausrichtbaren Kamera zur Erfassung eines vor einem Fahrzeug liegenden, zu durchfahrenden Straßenverlaufs, wobei ein Steuergerät vorgesehen ist, welches die Ausrichtung der Kamera steuert,
**dadurch gekennzeichnet,**
**dass** das Steuergerät fahrdynamische Parameter des Fahrzeugs und eine satellitengestützte Information über den aktuellen Standort des Fahrzeugs, und von einem Navigationssystem (30) Information über den Verlauf und/oder die örtliche Lage der Straße erhält und derart ausgebildet ist, dass die Kamera unter Verwendung einer Auswerteeinheit (50) bereits vor dem Beginn oder Ende einer Kurvenfahrt in Richtung des dann folgenden Straßenverlaufes verstellt wird, wobei die Auswerteeinheit die Istposition des Fahrzeugs und die Vorschau auf den vorausliegenden Straßenverlauf errechnet.

2. Kameravorrichtung nach Anspruch 1,
**dadurch gekennzeichnet,**
**daß** das Steuergerät das Ausgangssignal einer Navigationsvorrichtung für den Standort des Fahrzeugs erhält.

3. Kameravorrichtung nach Anspruch 2,
**dadurch gekennzeichnet,**
**daß** das Steuergerät und die Navigationsvorrichtung integriert sind.

4. Kameravorrichtung nach einem der Ansprüche 1 bis 3,
**dadurch gekennzeichnet, daß** das Steuergerät auch die Höhenausrichtung der Kamera steuert.

5. Kameravorrichtung nach einem der Ansprüche 1 bis 4,
**dadurch gekennzeichnet, daß** das Steuergerät auch das Erfassungsfeld der Kamera steuert.

6. Kameravorrichtung nach einem der vorhergehenden Ansprüche,
**dadurch gekennzeichnet,**
**daß** die Kamera auf einer horizontal bewegbaren Plattform angeordnet ist, die von dem Steuergerät angesteuert wird.

7. Kameravorrichtung nach einem der vorhergehenden Ansprüche,
**dadurch gekennzeichnet,**
**daß** als fahrdynamische Parameter ein Lenkwinkel, ein Gierwinkel und/oder eine Seitenbeschleunigung des Fahrzeugs dient.

## Claims

1. A camera device for vehicles with a camera with variable orientation for detecting the course of the road to be traversed located in front of a vehicle, a control apparatus being provided which controls the orientation of the camera, **characterised in that** the control apparatus receives vehicle dynamic parameters of the vehicle and satellite-assisted information on the current location of the vehicle, and information from a navigation system (30) about the course and/or the geographical location of the road and is designed such that the camera is adjusted using an evaluation unit (50) in the direction of the subsequent course of the road even before the start or end of cornering, wherein the evaluation unit calculates the actual position of the vehicle and the preview of the course of the road in front.

2. A camera device according to claim 1, **characterised in that** the control apparatus receives the output signal of a navigation device for the location of the vehicle.

3. A camera device according to claim 2, **characterised in that** the control apparatus and the navigation system are integrated.

4. A camera device according to any one of claims 1 to 3, **characterised in that** the control apparatus also controls the height orientation of the camera,

5. A camera device according to any one of Claims 1 to 4, **characterised in that** the control device also controls the detection field of the camera.

6. A camera device according to any one of the preceding claims, **characterised in that** the camera is arranged on a horizontally moveable platform which is controlled by the control apparatus.

7. A camera device according to any one of the preceding claims, **characterised in that** a steering angle, a yaw angle and/or a lateral acceleration of the vehicle serve as driving dynamic parameters.

## Revendications

1. Système de caméra pour véhicules comportant une caméra orientable variable destinée à saisir un trajet à parcourir en amont du véhicule, dans lequel il est prévu un appareil de commande, qui commande l'orientation de la caméra,
**caractérisé en ce que**
l'appareil de commande reçoit des paramètres relatifs à la dynamique de conduite du véhicule et une information par satellite sur l'emplacement momentané du véhicule, ainsi qu'une information à partir d'un système de navigation (30) sur la trajectoire et/ou la position locale de la route, et est configuré de telle sorte qu'en utilisant une unité d'exploitation (50) la caméra peut être réglée avant même l'amorçage ou la fin d'un virage dans la direction de la trajectoire de la route suivant cette portion, l'unité d'exploitation calculant la position réelle du véhicule et le film-annonce sur le trajet de route amont.

2. Système de caméra selon la revendication 1,
**caractérisé en ce que**
l'appareil de commande reçoit le signal de sortie d'un dispositif de navigation pour l'emplacement du véhicule.

3. Système de caméra selon la revendication 2,
**caractérisé en ce que**
l'appareil de commande et le dispositif de navigation sont intégrés.

4. Système de caméra selon l'une des revendications 1 à 3,
**caractérisé en ce que**
l'appareil de commande commande également l'orientation en hauteur de la caméra.

5. Système de caméra selon l'une des revendications 1 à 4,
**caractérisé en ce que**
l'appareil de commande commande également le champ de saisie de la caméra.

6. Système de caméra selon l'une des revendications précédentes,
**caractérisé en ce que**
la caméra est disposée sur une plate-forme mobile horizontalement, qui est commandée par l'appareil de commande.

7. Système de caméra selon l'une des revendications précédentes,
**caractérisé en ce qu'**
en tant que paramètre relatif à la dynamique de conduite on utilise un angle de lacet, un angle de roulis et/ou une accélération latérale du véhicule.
